(19) **Europäisches Patentamt**
**European Patent Office**
**Office européen des brevets**

(11) Veröffentlichungsnummer : **0 333 640 B1**

(12) **EUROPÄISCHE PATENTSCHRIFT**

(45) Veröffentlichungstag der Patentschrift :
**17.07.91 Patentblatt 91/29**

(51) Int. Cl.$^5$ : **F16K 15/00,** F16K 47/08,
F16K 27/00

(21) Anmeldenummer : **89810010.2**

(22) Anmeldetag : **09.01.89**

(54) **Mit einer Drosselvorrichtung versehenes Rückschlagventil.**

(30) Priorität : **11.01.88 CH 70/88**

(43) Veröffentlichungstag der Anmeldung :
**20.09.89 Patentblatt 89/38**

(45) Bekanntmachung des Hinweises auf die
Patenterteilung :
**17.07.91 Patentblatt 91/29**

(84) Benannte Vertragsstaaten :
**AT CH DE ES FR GB IT LI NL SE**

(56) Entgegenhaltungen :
**DE-A- 2 516 752**
**US-A- 3 934 609**
**Prospekt eines im Handel befindlichen und**
**bekannten Drossel- Rückschlagventils**

(73) Patentinhaber : **WIRTH + SCHWAAR**
**FLUIDTECHNIK AG**
**Industriestrasse 30**
**CH-8302 Kloten (CH)**

(72) Erfinder : **Wirth, Gustav**
**Leibrächistrasse 504**
**CH-8185 Winkel (CH)**

(74) Vertreter : **Riederer, Conrad A., Dr.**
**Bahnhofstrasse 10**
**CH-7310 Bad Ragaz (CH)**

EP 0 333 640 B1

## Beschreibung

Die Erfindung betrifft eine als Verschraubung ausgebildete Ventilvorrichtung mit einem zwei in einem Winkel zueinander angeordneten Bohrungen aufweisenden Ventilgehäuse, einer Drossel und einem Rückschlagventil.

Eine solche Ventilvorrichtung befindet sich im Handel. Sie ist als Verschraubung ausgebildet, so dass sie beispielsweise anstelle der Schwenkverschraubung bei einem Zylinder verwendet werden kann. Bei der bekannten Ventilvorrichtung übernimmt eine flexible Ringmanschette die Funktion des Rückschlagventils. Bei einem Strom in Richtung zum Zylinder drückt die Versorgungsluft die Ringmanschette auseinander, wodurch die Durchflussöffnung ohne Drosselwirkung voll freigegeben wird. Bei einem Strom in Richtung weg vom Zylinder wird die flexible Ringmanschette nach innen gegen eine Lochhülse gedrückt. Dadurch wird die volle Durchflussöffnung verschlossen und die Abluft über eine einstellbare Drossel geleitet. Es findet also eine Abluft-Drosselung statt. Ventile mit flexiblen Ringmanschetten sind bekanntermaßen temperaturempfindlich. Bei tiefen Temperaturen wird die Ringmanschette steif. Weiter sind Ringmanschetten einer gewissen Alterung unterworfen. Sie können nach einer gewissen Zeit spröde werden und reissen. Die bekannte Ventilvorrichtung besitzt einen relativ kleinen Durchflussquerschnitt.

Von diesem Stand der Technik ausgehend ist es daher Aufgabe der vorliegenden Erfindung, die gattungsgemäße Ventilvorrichtung weiter zu bilden. Sie sollte ebenfalls als Schwenkverschraubung eingesetzt werden können. Nach Möglichkeit sollte die Ventilvorrichtung sowohl zur Abluft- als auch zur Zuluftdrosselung oder gar als blosse Drossel verwendbar sein. Im letzten Fall wäre es auch wünschenswert, wenn von aussen klar ersichtlich wäre, welche Funktion eingestellt ist.

Gemäss der Erfindung ist bei einer Ventilvorrichtung der eingangs genannten Art das Rückschlagventil in einer dritten Bohrung im Ventilgehäuse angeordnet, welche mit beiden Bohrungen kommuniziert. Diese Anordnung hat den Vorteil, dass trotz der Ausführung der Ventilvorrichtung als Verschraubung der Durchflussquerschnitt nicht durch die Nennweite der Verschraubung zu stark begrenzt wird. Trotzdem ist die Ventilvorrichtung sehr einfach und kompakt im Aufbau. Sie eignet sich deshalb auch sehr gut zur Anordnung auf einem pneumatischen Zylinder. Dies hat den Vorteil, dass bei einer Maschine sofort ersichtlich ist, welchem Organ der Maschine die Ventilvorrichtung zugehört. Dies trägt zur Sicherheit bei. Es besteht dann nämlich keine Gefahr, dass bei Unterhaltsarbeiten ein Ventil mit einem anderen Ventil verwechselt wird, wie dies leicht der Fall ist, wenn mehrere Ventile auf einem Wegeventil angeordnet sind und der Leitungsverlauf zu den verschiedenen Zylindern nicht klar ersichtlich ist.

Da das bewegliche Ventilglied auf einem Ventilträger angeordnet ist, der in die Aussparung des Ventilgehäuses eingesetzt ist, Kann das Rückschlagventil als Einheit gebaut und nachträglich in das Ventilgehäuse eingesetzt werden. Von besonderem Vorteil ist jedoch diese Konstruktion, wen der Ventilträger im Ventilgehäuse verstellbar ist. Durch Drehen des Ventilträgers kann dann wahlweise entweder eine Zuluftdrosselung, eine Abluftdrosselung oder eine Zu- und Abluftdrosselung bewirkt werden.

Vorteilhaft ist die dritte Bohrung so angeordnet, dass sie die erste und/oder zweite Bohrung anschneidet. Dies hat den Vorteil, dass bei der Herstellung keine besonderen Fräseroperationen notwendig sind, um die notwendigen Durchgänge zwischen den Bohrungen zu schaffen.

Vorteilhaft ist aussen auf der Ventilvorrichtung ein Schema angebracht. Dabei kann ein Teil des Schemas auf dem Ventilgehäuse und ein anderer Teil auf der Aussenseite des Ventilträgers angeordnet sein. Dies hat den Vorteil, dass bei einer Verstellung des Ventilträgers zwangsläufig auch eine Schemaänderung bewirkt wird. Man sieht somit mit einem Blick auf das Ventil, ob es mit Zuluft- oder Abluftdrosselung oder auch als blosse Drossel arbeitet.

Zweckmässigerweise besitzt der Ventilträger an jedem Ende eine Nut, in welcher ein Dichtring angeordnet ist. Es sind dann keine besonderen Dichtmassnahmen notwendig. Es genügt vielmehr, den Ventilträger mit dem darauf angeordneten Rückschlagventil in das Ventilgehäuse einzusetzen, um für das Rückschlagventil die notwendige Dichtung nach aussen zu bewirken.

Vorteilhaft ist das bewegliche Ventilglied quer zur dritten Bohrung angebracht und durch mindestens eine Feder gegen die Wandung der dritten Bohrung vorgespannt wird. Dies ergibt eine sehr einfache Konstruktion des Rückschlagventils.

Das Ventilglied kann auf zwei einander gegenüberliegenden Seiten einen Vorsprung aufweisen, der in einer Führung im Ventilträger läuft. Dadurch wird eine sichere Funktion des Ventilgliedes sichergestellt.

Es ist aber auch möglich, zwei auf dem Ventilträger axial in einem Abstand voneinander quer zur dritten Bohrung angeordnete Führungsstifte zur Führung des Ventilgliedes auf zwei einander gegenüberliegenden Seiten zu verwenden. Dies gibt eine einfache Konstruktion des in das Ventilgehäuse einsetzbaren Ventilträgers mit Ventilglied. Dabei können die Federn koaxial zu den Führungsstiften angeordnet werden.

Eine vorteilhafte Ausführungsform der Ventilvorrichtung sieht vor, dass ein Ende des Anschlussgliedes

2

durch einen Vielkant, z.B. Sechskant, gebildet wird, der auf einer Seite des Ventilgehäuses angeordnet ist, und dass das andere Ende des Anschlussgliedes durch ein Gewindestück gebildet wird, das auf der anderen Seite aus dem Ventilgehäuse ragt. Dies ermöglicht es, die Ventilvorrichtung anstelle einer Schwenkverschraubung zu verwenden. Es ist somit keine, zusätzliche Schwenkverschraubung notwendig. Trotzdem hat die Ventilvorrichtung, den Vorteil eines grossen Durchflussquerschnittes, wie er bisher bei als Verschraubung ausgebildeten Drossel-Rückschlagventilen nicht vorhanden war.

Vorteilhaft weist der im Ventilgehäuse befindliche Abschnitt des Anschlussgliedes zwei Einschnürungen auf, um in der ersten Bohrung zwei Ringkanäle zu bilden, welche mit der zweiten bzw. der dritten Bohrung kommunizieren können. Dies ergibt eine sehr einfache Konstruktion. Das Anschlussglied kann als Decolletageteil produziert werden.

Zweckmässigerweise wird ferner vorgesehen, dass auf dem Anschlussglied beim Vielkant, zwischen den beiden Ringkanälen und beim Gewindestück je eine Dichtung vorgesehen ist. Bei den ersten zwei Dichtungen handelt es sich zweckmässigerweise um O-Ringe aus elastomerischem Material, die sehr billig sind.

Ausführungsbeispiele der Erfindung werden nun unter Bezugnahme auf die Zeichnung beschrieben. Es zeigt :

| Figur 1 | eine Ansicht eines ersten Ausführungsbeispiels der Ventilvorrichtung, wobei das auf dem Ventil angeordnete Schema zeigt, dass eine Abluftdrosselung stattfindet, |
| Figur 2 | einen Schnitt durch die Ventilvorrichtung von Fig. 1, mit dem Ventilträger in Stellung für Abluftdrosselung, |
| Figur 3 | einen Längsschnitt durch den Ventilträger mit dem Ventilglied, |
| Figur 4 | eine Draufsicht auf den Ventilträger und das Ventilglied von Fig. 3, |
| Figur 5 | einen Längsschnitt durch eine andere Ausgestaltung des Ventilträgers und des Ventilgliedes, |
| Figur 6 | eine Draufsicht auf den Ventilträger und das Ventilglied von Fig. 5, |
| Figur 7 | eine von Fig. 2 abweichende Ausgestaltung der Ventilvorrichtung, bei welcher das Ventilglied ohne Zuhilfenahme eines Ventilträgers in der Bohrung angeordnet ist, |
| Figur 8 und 9 | eine Ansicht und einen Schnitt wie in den Figuren 1 und 2, wobei aber der Ventilträger so angeordnet ist, dass eine Zuluftdrosselung bewirkt wird, |
| Figur 10 und 11 | einen Schnitt wie in den Figuren 1 und 2, wobei aber der Ventilträger so angeordnet ist, dass sowohl eine Zuluft- als auch eine Abluftdrosselung bewirkt wird, und |
| Figur 12 | eine zweite Ausführungsform, bei der die das Ventil enthaltende Bohrung die beiden anderen Bohrungen des Ventilgehäuses anschneidet, um Durchlässe zu bilden. |

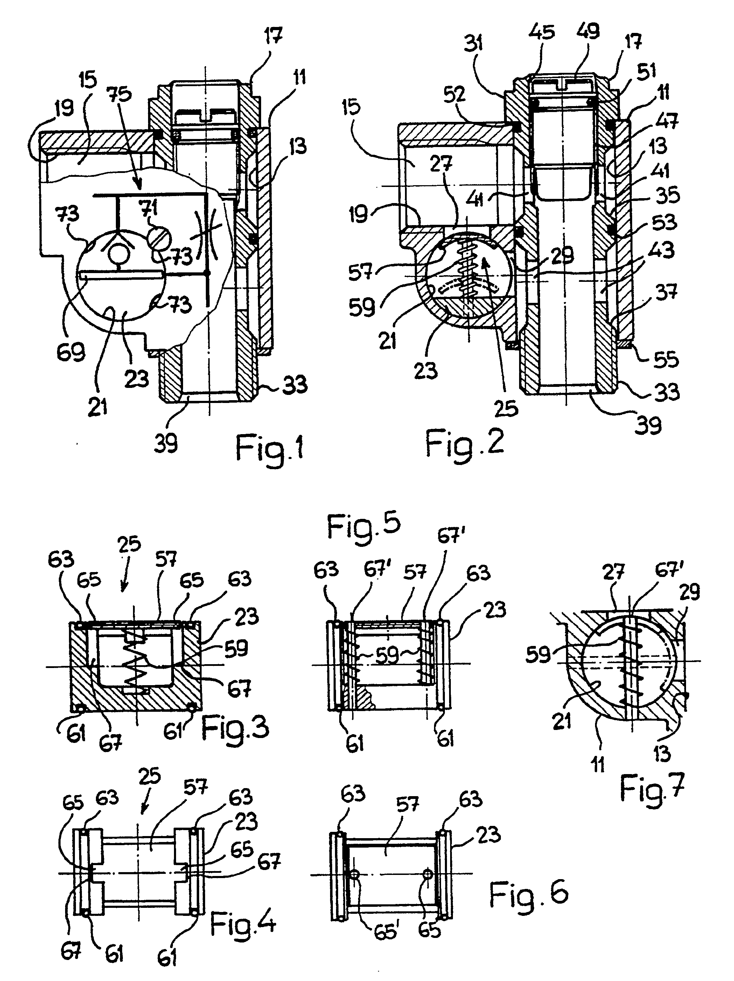

Wie die Figuren 1 und 2 zeigen, weist die Ventilvorrichtung ein Ventilgehäuse 11 auf. In diesem sind im rechten Winkel zueinander angeordnete Bohrungen 13 und 15 vorgesehen. Die Bohrung 13 dient der Aufnahme eines Anschlussgliedes 17. Die Bohrung 15 weist ein Gewinde 19 auf, das dem Anschluss einer Leitung dient. Im rechten Winkel zur Ebene, in welcher sich die Bohrungen 13 und 15 befinden, ist eine Aussparung in Form einer weiteren dritten Bohrung 21 angeordnet. In dieser Aussparung befindet sich ein Ventilträger 23 mit einem Rückschlagventil 25. Von der Bohrung 21 führt ein Durchlass 27 zur Bohrung 15 und ein Durchlass 29 zur Bohrung 13. Die Bohrung 21 kann also mit beiden Bohrungen 15 und 13 im Ventilgehäuse kommunizieren.

Das Anschlussglied 17 besteht aus einem Decolletageteil und weist an einem Ende einen Sechskant 31 auf. Das andere Ende des Anschlussgliedes 17, welches aus dem Ventilgehäuse 11 herausragt, wird durch ein Gewindestück 33 gebildet. Die dargestellte Ausführungsform der Ventilvorrichtung stellt also auch eine Schwenkverschraubung dar. Beim Festschrauben des Anschlussgliedes 17 auf einen pneumatischen Zylinder oder ein anderes Gerät kann somit das Ventilgehäuse 11 in irgend eine Lage geschwenkt und in dieser festgeschraubt werden. Die kompakte Form und die Freiheit der Anordnung bei der Montage werden vom Monteur und dem Servicepersonal sehr geschätzt, besonders wenn wenig Platz für eine grosse Zahl von pneumatischen Leitungen vorhanden ist.

Der sich innerhalb des Ventilgehäuses 11 befindliche Abschnitt des Anschlussgliedes 17 weist zwei Einschnürungen 35, 37 auf, die innerhalb des Ventilgehäuses je einen Ringkanal bilden. Im Anschlussglied 17 ist eine koaxiale Bohrung 39 angeordnet. Ueber Querbohrungen 41, 43 kommuniziert die Bohrung 39 mit den Ringkanälen 35 und 37. Die Bohrung 39 weist im oberen Teil einen Abschnitt 45 mit einem erweiterten Durchmesser auf. Anschliessend an diesen Abschnitt 45 befindet sich ein Gewindeabschnitt 47. In diesen Gewindeabschnitt ist eine Drosselschraube 49 mehr oder weniger tief eingeschraubt, um die Querbohrung 41 mehr oder weniger stark oder vollständig abzudecken, um eine mehr oder weniger starke Drosselung bzw. Absperrung zu bewirken. Die Drosselschraube 49 ist mit einer O-Ringdichtung 51 versehen. Beim Anschlussglied 17 sind O-Ringdichtungen 52 und 53 in der Nähe des Sechskants 31 und zwischen den beiden Ringkanälen 35, 37 vorgesehen. Eine Dichtung 55 findet sich ferner beim Gewindestück 33.

Wie bereits erwähnt wurde, ist das Rückschlagventil 25 auf einem Ventilträger 23 angeordnet. Das Rückschlagventil 25 weist ein quer zur Bohrung 21 bewegliches Ventilglied 57 auf, das durch eine Feder 59 gegen die Wandung der Bohrung 21 vorgespannt wird. Wie Figur 2 zeigt, wird dadurch der Durchlass 27 zur Bohrung 15 verschlossen.

Der Ventilträger 23 besitzt auch die Aufgabe, beide Enden der Bohrung 21 abzudichten. Zu diesem Zweck besitzt der Ventilträger 23 an jedem Ende eine Nut 61, in welche ein O-Ring 63 eingelassen ist (Figuren 3 und 4). Das Ventilglied 57 besitzt auf zwei einander gegenüberliegenden Seiten einen Vorsprung 65. Jeder Vorsprung 65 läuft in einer Führung 67 im Ventilträger 23.

Eine andere Ausbildung des Ventilträgers 23 ist in den Figuren 5 und 6 dargestellt. Wiederum ist an beiden Enden des Ventilträgers 23 eine Nut 61 vorgesehen, in welche ein O-Ring 63 eingelassen ist. Ausserhalb des Bereiches des Durchlasses 27 (Fig. 2) besitzt das Ventilglied 57 an jedem seiner Enden eine Bohrung 65'. Zur Führung des Ventilgliedes 57 dienen Führungsstifte 67', die im Ventilträger 23 befestigt sind. Die Führungsstifte 67' dienen auch der Aufnahme der Schraubenfedern 59, welche bestrebt sind, das Ventilglied 57 gegen den Durchlass 27 zu drücken, um diesen zu verschliessen.(Fig. 2).

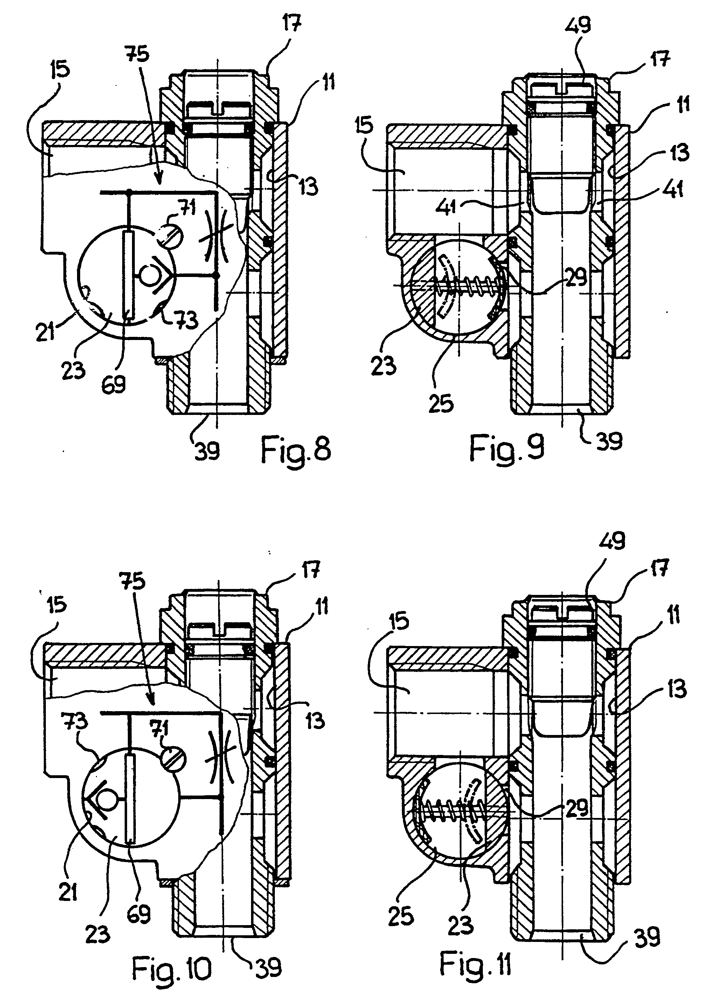

Bei einer vereinfachten Ausführung sind die Führungsstifte 67' statt in einem Ventilträger im Ventilgehäuse 11 angeordnet (Fig. 7). In diesem Fall muss die Bohrung 21 durch geeignete Deckel verschlossen werden. Diese Deckel (nicht eingezeichnet) können z.B. durch Bördeln im Ventilgehäuse 11 befestigt werden. Eine solche Ventilvorrichtung ist dann aber im Gegensatz zur Ventilvorrichtung der Fig. 2 nicht verstellbar. Die in Fig. 7 gestrichelt gezeichnete Ausführung entspricht dem Ventil mit der Ventilstellung der Figuren 8 und 9.

Im Betrieb bewirkt die Ventilvorrichtung von Figur 1 und 2 eine Abluftdrosselung. In der in Fig. 1 gezeigten Stellung der Drosselschraube 49 wird eine vollständige Drosselung bewirkt. In der Regel ist jedoch die Drosselschraube 49 nicht so tief eingeschraubt wie in Fig. 1 eingezeichnet, so dass z.B. Abluft von einem Zylinder durch die Bohrung 39 und dann an der Drosselschraube 49 vorbei in die Querbohrung 41 und von dort in den Ringkanal 45 und die Bohrung 15 fliessen kann (Fig. 2). Soll hingegen ein Zylinder beaufschlagt werden, so fliesst die Zuluft durch die Bohrung 15 in den Durchlass 27 und drückt das Ventilglied 57 in die strich-punktiert eingezeichnete Lage. Aus der Bohrung 21 fliesst dann die Luft durch den Durchlass 29 in den Ringkanal 37 und die Querbohrung 43 in die Bohrung 39. Es ist zu beachten, dass die Querschnitte der verschiedenen Bohrungen und Durchlässe gross sind. Diese Querschnitte sind wesentlich grösser als bei den bekannten als Verschraubungen ausgebildeten Drossel-Rückschlagventilen.

Wie aus Figur 1 ersichtlich, ist am Ventilträger 23 ein Schlitz 69 ausgebildet, mit welchem der Ventilträger 23 in der Bohrung 21 gedreht werden kann. Der Ventilträger 23 kann in drei verschiedenen Stellungen mit einem Sperrorgan, z.B. einer Schraube 71 gesichert werden. Die Schraube 71 greift zu diesem Zweck in eine der Aussparungen 73 im Ventilträger 23 ein. Wird der Ventilträger 23 in die in den Figuren 8 und 9 gezeigte Stellung gedreht, so entsteht aus dem Drossel-Rückschlagventil der Figuren 1 und 2 mit Abluftdrosselung ein Drossel-Rückschlagventil mit Zuluftdrosselung. Aus Figur 9 ist ersichtlich, dass die Zuluft nur durch den Durchlass 41 in die Bohrung 39 gelangen kann, dass aber die Abluft über den Durchlass 29 das Ventil 25 betätigen kann, um in die Bohrung 15 zu gelangen.

In der Stellung der Figuren 10 und 11 macht der Ventilträger 23 das Ventil 25 unwirksam, so dass die Ventilvorrichtung nur noch als Drossel arbeitet.

Aussen auf dem Ventil ist auf einer oder auf beiden Seiten ein Schema 75 angebracht, z.B. durch Siebdruck aufgedruckt. Ein Teil des Schemas 75 befindet sich auf dem Ventilgehäuse 11 und ein anderer Teil auf der Aussenseite des Ventilträgers 23. Eine Verstellung des Ventilträgers 23 bewirkt daher zwangsläufig auch eine Schemaänderung. So zeigt das Schema 75 von Fig. 1, dass, wenn die Ventilvorrichtung mit dem Gewinde 33 auf einen Zylinder geschraubt ist, mit Abluftdrosselung gearbeitet wird. In entsprechender Weise zeigt das Schema 75 von Fig. 8 die Verwendung zur Zuluftdrosselung und das Schema von Fig. 10 die Verwendung zur Zu- und Abluftdrosselung.

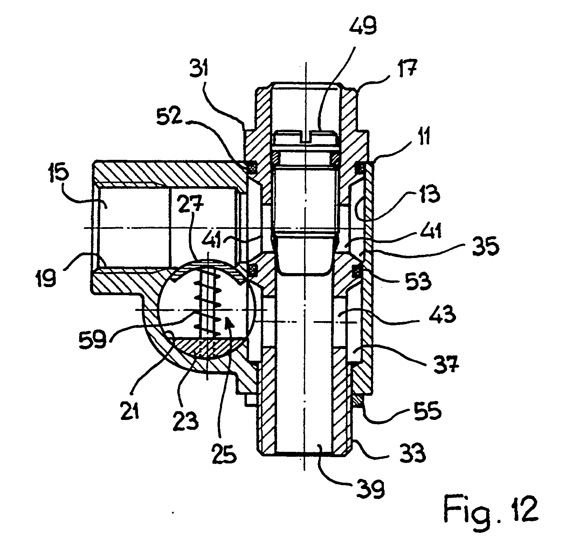

Die Ausführungsform der Ventilvorrichtung von Fig. 12 ist grundsätzlich gleich aufgebaut wie die vorher beschriebene. Die Bohrung 21 ist jedoch so angeordnet, dass sie die Bohrungen 13 und 15 schneidet. Bei dieser Ausführung des Ventilgehäuses 11 werden somit schon bei der Herstellung der Bohrungen 13, 15 und 21 die Durchgänge geschaffen, welche beim Ventilgehäuse 11 von Fig. 2 durch spezielle Herstellungsoperationen hergestellt werden müssen,(z.B. Ausfräsungen 27, 29 in Fig. 2). Beim Ventilgehäuse von Fig. 12 muss aber dafür gesorgt werden, dass das Gewinde 19 nicht in den Bereich des Ventilglieds 57 reicht.

**EP 0 333 640 B1**

## Patentansprüche

1. Als Verschraubung ausgebildete Ventilvorrichtung mit einem zwei in einem Winkel zueinander angeordneten Bohrungen (13, 15) aufweisenden Ventilgehäuse (11), einer Drossel (49) und einem Rückschlagventil (25), dadurch gekennzeichnet, dass das Rückschlagventil (25) in einer dritten Bohrung (21) im Ventilgehäuse angeordnet ist, welche mit den beiden Bohrungen (13, 15) kommuniziert, und daß ein bewegliches Ventilglied (57) des Rückschlagventils (25) auf einem Ventilträger (23) angeordnet ist, der in die dritte Bohrung (21) eingesetzt ist.

2. Ventilvorrichtung nach Anspruch 1, dadurch gekennzeichnet, dass der Ventilträger (23) im Ventilgehäuse (11) verstellbar ist, um wahlweise eine Zuluftdrosselung, Abluftdrosselung oder Zu- und Abluftdrosselung zu bewirken.

3. Ventilvorrichtung nach einem der Ansprüche 1 bis 2, dadurch gekennzeichnet, dass die dritte Bohrung (21) so angeordnet ist, dass sie die erste und/oder zweite Bohrung (13, 15) anschneidet.

4. Ventilvorrichtung nach einem der Ansprüche 1 bis 3, dadurch gekennzeichnet, dass der Ventilträger (23) in der dritten Bohrung (21) drehbar ist.

5. Ventilvorrichtung nach einem der Ansprüche 1 bis 4, mit einem aussen auf der Ventilvorrichtung, z.B. dem Ventilgehäuse (11), angebrachten Schema, dadurch gekennzeichnet, dass ein Teil des Schemas auf der Aussenseite des Ventilträgers (23) angeordnet ist, so dass bei einer Verstellung des Ventilträgers (23) zwangsläufig auch eine Schemaänderung bewirkt wird (Figuren 1, 8, 10).

6. Ventilvorrichtung nach einem der Ansprüche 1 bis 5, dadurch gekennzeichnet, dass der Ventilträger (23) an jedem Ende eine Nut (61) aufweist, in welcher ein Dichtungsring (63) angeordnet ist.

7. Ventilvorrichtung nach einem der Ansprüche 1 bis 6, dadurch gekennzeichnet, dass das bewegliche Ventilglied (57) quer zur dritten Bohrung (21) angeordnet ist und durch eine Feder (59) gegen die Wandung der dritten Bohrung (21) vorgespannt wird.

8. Ventilvorrichtung nach einem der Ansprüche 1 bis 7, gekennzeichnet durch zwei auf dem Ventilträger (23) axial in einem Abstand voneinander quer zur dritten Bohrung angeordnete Führungsstifte (67') zur Führung des Ventilglieds (57) auf zwei einander gegenüberliegenden Seiten (Figuren 5, 6).

9. Ventilvorrichtung nach Anspruch 8, dadurch gekennzeichnet, dass koaxial zum jeweiligen Führungsstift eine Feder (59) zum Vorspannen des Ventilgliedes angeordnet ist.

10. Ventilvorrichtung nach einem der Ansprüche 1 bis 7, dadurch gekennzeichnet, dass das Ventilglied (57) auf zwei einander gegenüberliegenden Seiten einen Vorsprung (65) aufweist, der in einer Führung (67) im Ventilträger (23) läuft (Figuren 3, 4).

11. Ventilvorrichtung nach einem der Ansprüche 1 bis 10, dadurch gekennzeichnet, dass ein Anschlussglied (17) mit einer axialen Bohrung (39) in die erste Bohrung (13) des Ventilgehäuses eingesetzt ist, dass ein Ende des Anschlussgliedes (17) durch einen Vielkant (31) gebildet wird, der auf einer Seite des Ventilgehäuses (11) angeordnet ist, und dass das andere Ende des Anschlussgliedes (17) durch ein Gewindestück (33) gebildet wird, das auf der anderen Seite aus dem Ventilgehäuse (11) ragt.

12. Ventilvorrichtung nach Anspruch 11, dadurch gekennzeichnet, dass der im Ventilgehäuse (11) befindliche Abschnitt des Anschlussgliedes (17) zwei Einschnürungen aufweist, um in der ersten Bohrung (13) zwei Ringkanäle (35, 37) zu bilden, die mit der zweiten bzw. dritten Bohrung (15, 21) kommunizieren können.

13. Ventilvorrichtung nach Anspruch 11 oder 12, dadurch gekennzeichnet, dass auf dem Anschlussglied (17) beim Vielkant (31), zwischen den beiden Ringkanälen (35, 37) und beim Gewindestück (33) je eine Dichtung (52, 53, 55) vorgesehen ist.

14. Ventilvorrichtung nach einem der Ansprüche 11 bis 13, dadurch gekennzeichnet, dass die verstellbare Drossel als Drosselschraube (49) in der mit einem Gewindeabschnitt (47) versehenen Bohrung (39) des Anschlussgliedes (17) ausgebildet ist.

15. Ventilvorrichtung nach Anspruch 14, dadurch gekennzeichnet, dass die Drosselschraube (49) mit einer Dichtung (51) versehen ist, welche eine Reibung bewirkt, um die Drosselschraube (49) in der eingestellten Lage zu halten.

## Claims

1. Valve device in form of a screw connection comprising a valve housing (11) having two bores (13, 15) arranged at an angle between them, a throttle (49) and a check valve (25), characterised in that the check valve (25) is located in a third bore (21) in the valve housing (11), said third bore (21) communicating with both other bores (13, 15), and in that a movable valve member (57) of the check valve (25) is located on a valve support (23) inserted in the third bore (21).

5

2. Valve device as in claim 1, characterised in that the valve support (23) can be adjusted in the valve housing (11) for selectively provide throttling of supply air, throttling of used air, or throttling of supply air and used air.

3. Valve device as claimed in one of the claims 1 or 2, characterised in that the third bore (21) is located in such a way as to intersect the first and/or the second bore (13, 15).

4. Valve device as claimed in one of the claims 1 to 3, characterised in that the valve support (23) is rotatable in the third bore (21).

5. Valve device as in one of the claims 1 to 4, comprising a schematic diagram on the exterior surface of the valve device, for example on the valve housing, characterised in that a part of the schematic diagram is located on the valve carrier (23) in order to forcibly cause, on an adjustment of the valve support (23), also a change of the schematic diagram (figures 1, 8, 10).

6. Valve device as in one of the claims 1 to 5, characterised in that the valve carrier (23) has at each end a groove (61) in which a seal ring (63) is located.

7. Valve device as in one of the claims 1 to 6, characterised in that the movable valve member (57) is located transverse to the third bore (21) and is biassed by a spring (59) against the wall fo the third bore (21).

8. Valve device as in one of the claims 1 to 7, characterised by two guide pins (67') located on the valve support (23) at an axial distance from each other and transverse to the third bore for guiding the valve member (57) on two sides opposite to each other (figures 5, 6).

9. Valve device as in claim 8, characterised in that a spring (59) is located coaxially to each guide pin for biassing the valve member.

10. Valve device as in one of the claims 1 to 7, characterised in that the valve member (57) has on two sides opposite to each other a protrusion (65) gliding in a guide (67) in the valve support (23) (figures 3, 4).

11. Valve device as in one of the claims 1 to 10, characterised in that a connection member (17) having an axial bore (13) is located in the first bore (13) of the valve housing, in that one end of the connection member (17) is formed by a polygon located on one side of the valve housing (11), and in that the other end of the connection member (17) is formed by a threaded section (33) protruding on the other side from the valve housing (11).

12. Valve device as in claim 11, characterised in that the section of the connection member (17) located in the valve housing (11) has two constrictions to form in the first bore (13) two circular channels (35, 37) which can communicate with the second and the third bore (15, 21), respectively.

13. Valve device as in claim 11 or 12, characterised in that seals (52, 53, 55) are provided on the connection member (17) near the polygon (31), between the two circular channels (35, 37), and near to the threaded section (33).

14. Valve device as in one of the claims 11 to 13, characterised in that the adjustable throttle is realised in form of throttle screw (49) in a bore (39) of the connection member (17), said bore being provided with a threaded section (39).

15. Valve device as in claim 14, characterised in that the throttle screw (49) is provided with a seal (51), which provides friction to keep the throttle screw (49) in the position set.

## Revendications

1. Dispositif à clapet réalisé sous forme de raccord à vis, comprenant un corps de clapet (11) qui présente deux forures (13, 15) formant un angle entre elles, un dispositif d'étranglement (49) et un clapet anti-retour (25), caractérisé en ce que le clapet anti-retour (25) est disposé dans le corps de clapet dans une troisième forure (21) qui communique avec les deux forures (13, 15), et en ce qu'un organe mobile (57) du clapet anti-retour (25) est disposé sur un porte-clapet (23) qui est logé dans la troisième forure (21).

2. Dispositif à clapet selon la revendication 1, caractérisé en ce que le porte-clapet (23) peut être déplacé dans le corps de clapet (11), afin de produire au choix un étranglement de l'air entrant, un étranglement de l'air sortant ou un étranglement de l'air entrant et sortant.

3. Dispositif à clapet selon la revendication 1 ou 2, caractérisé en ce que la troisième forure (21) est disposée de telle sorte qu'elle empiète sur la première et/ou la deuxième forure (13, 15).

4. Dispositif à clapet selon l'une quelconque des revendications 1 à 3, caractérisé en ce que le porte-clapet (23) peut tourner dans la troisième forure (21).

5. Dispositif à clapet selon l'une quelconque des revendications 1 à 4, comportant un schéma placé extérieurement sur le dispositif à clapet, par exemple sur le corps de clapet (11), caractérisé en ce qu'une partie du schéma est disposée sur le côté extérieur du porte-clapet (23), de telle sorte que lorsque le porte-clapet (23) est déplacé, il se produise forcément aussi une modification du schéma (fig. 1, 8, 10).

6. Dispositif à clapet selon l'une quelconque des revendications 1 à 5, caractérisé en ce que le porte-clapet (23) présente à chaque extrémité une gorge (61) dans laquelle est disposée une bague d'étanchéité (63).

7. Dispositif à clapet selon l'une quelconque des revendications 1 à 6, caractérisé en ce que l'organe mobile (57) du clapet est disposé transversalement par rapport à la troisième forure (21) et est précontraint contre la paroi de la troisième forure par un ressort (59).

8. Dispositif à clapet selon l'une quelconque des revendications 1 à 7, caractérisé par deux tiges de guidage (67') disposées sur le porte-clapet (23) transversalement par rapport à la troisième forure à distance axiale l'une de l'autre, pour le guidage de l'organe mobile (57) du clapet sur deux côtés opposés de celui-ci (fig. 5, 6).

9. Dispositif à clapet selon la revendication 8, caractérisé en ce qu'un ressort (59) est disposé coaxialement par rapport à chaque tige de guidage pour précontraindre l'organe mobile du clapet.

10. Dispositif à clapet selon l'une quelconque des revendications 1 à 7, caractérisé en ce que l'organe mobile (57) du clapet présente, sur chacun de deux côtés opposés l'un à l'autre, une saillie (65) qui coulisse dans un guide (67) formé dans le porte-clapet (23) (fig. 3, 4).

11. Dispositif à clapet selon l'une quelconque des revendications 1 à 10, caractérisé en ce qu'un organe de raccordement (17) comportant une forure axiale (39) est inséré dans la première forure (13) du corps de clapet, en ce qu'une extrémité de l'organe de raccordement (17) est constituée par un multi-pans (31) qui est disposé sur un côté du corps de clapet (11), et en ce que l'autre extrémité de l'organe de raccordement (17) est constituée par une pièce filetée (33) qui fait saillie hors du corps de clapet (11) de l'autre côté de celui-ci.

12. Dispositif à clapet selon la revendication 11, caractérisé en ce que la partie de l'organe de raccordement (17) qui se trouve dans la cage de soupape (11) présente deux rétrécissements, pour former, dans la première forure (13), deux passages annulaires (35, 37) qui peuvent communiquer respectivement avec les deuxième et troisième forures (15, 21).

13. Dispositif à clapet selon la revendication 11 ou 12, caractérisé en ce que des garnitures d'étanchéité (52, 53, 55) sont prévues sur l'organe de raccordement (17), respectivement près du multi-pans (31), entre les deux passages annulaires (35, 37) et près de la pièce filetée (33).

14. Dispositif à clapet selon l'une quelconque des revendications 11 à 13, caractérisé en ce que le dispositif d'étranglement réglable est réalisé sous forme d'une vis d'étranglement (49) disposée dans la forure (39) de l'organe de raccordement (17) munie d'une partie filetée (47).

15. Dispositif à clapet selon la revendication 14, caractérisé en ce que la vis d'étranglement (49) est munie d'une garniture d'étanchéité (51) qui crée un frottement pour maintenir la vis d'étranglement (49) dans la position réglée.

Fig.1

Fig.2

Fig.5

Fig.3

Fig.7

Fig.4

Fig.6

Fig. 8

Fig. 9

Fig. 10

Fig. 11

Fig. 12